Europäisches Patentamt

European Patent Office

Office européen des brevets

(11) Numéro de publication : **0 106 746**
**B1**

(12) **FASCICULE DE BREVET EUROPÉEN**

(45) Date de publication du fascicule du brevet :
15.04.87

(51) Int. Cl.⁴ : **B 01 D 15/08**, G 01 N 30/02

(21) Numéro de dépôt : 83401883.0

(22) Date de dépôt : 27.09.83

(54) Dispositif de remplissage de colonnes chromatographiques.

(30) Priorité : 05.10.82 FR 8216672

(43) Date de publication de la demande :
25.04.84 Bulletin 84/17

(45) Mention de la délivrance du brevet :
15.04.87 Bulletin 87/16

(84) Etats contractants désignés :
CH DE GB LI NL

(56) Documents cités :
EP-A- 0 008 921
EP-A- 0 089 255
DE-A- 2 926 872
FR-A- 2 219 797
FR-A- 2 369 861
FR-A- 2 422 426

(73) Titulaire : **SOCIETE NATIONALE ELF AQUITAINE (PRODUCTION)**
**Tour Aquitaine**
**F-92400 Courbevoie (FR)**

(72) Inventeur : **Morin Cet, Daniel**
**Rue Molière**
**64300 Orthez (FR)**
Inventeur : **Prechner, Roland**
**7 rue De Piétat**
**64000 Pau (FR)**

(74) Mandataire : **Hirsch, Marc-Roger**
**Cabinet Hirsch 34 rue de Bassano**
**F-75008 Paris (FR)**

Jouve, 18, rue St-Denis, 75001 Paris, France

## Description

La présente invention a pour objet un dispositif de remplissage d'une colonne chromatographique comportant une chambre de compression mise sous pression au moyen d'un piston coulissant de façon étanche dans l'alésage de la chambre de compression et actionné par un organe mécanique tel qu'une tige de vérin.

La présente invention a pour objet un dispositif de remplissage des colonnes de chromatographie qui permet d'obtenir pour celles-ci des performances voisines de la limite théorique fixée par les caractéristiques du garnissage, quel que soit le diamètre de la colonne. Elle convient spécialement pour les garnissages de fine granulométrie (particules de diamètre inférieur à 40 μm) qui permettent d'atteindre une bonne efficacité.

De nombreux procédés ont été décrits pour remplir les colonnes de faible diamètre utilisées en Chimie Analytique avec des garnissages de très faible granulométrie (inférieur à 10 μm et jusqu'à 3 μm actuellement). Tous utilisent la détente brusque dans la colonne d'une suspension du garnissage dans un liquide convenable, celle-ci ayant été préalablement comprimée sous forte pression (plusieurs centaines de bars). C'est le remplissage par voie humide qui a pour but d'obtenir un tassement homogène et aussi compact que possible du lit poreux.

Lorsque les diamètres des colonnes sont plus importants, cette méthode devient vite impraticable du fait des contraintes technologiques qu'elle impose. Pour ces colonnes, deux procédés de remplissage sont encore utilisés en chromatographie liquide et connus sous le nom de « compression radiale » et « compression axiale ».

Le procédé de compression radiale est un procédé de remplissage à sec dans lequel, en général, la colonne est à double enveloppe. L'enveloppe intérieure qui constitue la colonne proprement dite est un cylindre de matière souple déformable qui contient le garnissage sec. Cette enveloppe est placée dans l'enveloppe extérieure qui est un cylindre métallique rigide. Une pression de gaz de 30 à 40 bars est appliquée dans l'espace annulaire étanche compris entre les deux cylindres comprimant ainsi « radialement » le garnissage. L'homogénéité et la compacité de celui-ci sont supposées pré-exister à l'application de la pression qui n'a pour effet que de les conserver lorsque la colonne sera soumise à l'élution.

Le procédé de compression axiale est une méthode de remplissage par voie humide. La colonne est constituée d'un cylindre dans lequel coulisse un piston, le tout soigneusement usiné et ajusté. Le piston, mû par un vérin, permet de comprimer le garnissage mis en suspension dans un liquide afin d'obtenir le tassement nécessaire pour réaliser de bonnes performances. La colonne est donc constituée par l'ensemble cylindre-piston-vérin et est maintenue sous pression pendant l'élution.

Ces deux procédés ont l'inconvénient d'imposer l'utilisation d'un matériel assez complexe et surtout encombrant pour maintenir la pression statique pendant l'élution. De plus, ils ne permettent pas le réarrangement des particules du garnissage pendant la compression, ce qui conduit à un tassement incomplet de celui-ci.

On connaît du EP-A-892 55 (Priorité : 25.02.82 ; Date de publication de la demande : 21.09.83) un dispositif de remplissage relié à la colonne par une buse de compression et comprenant un vérin actionnant un corps solide non poreux permettant de comprimer la phase stationnaire.

Dans EP-A-892 1 est décrit un dispositif de remplissage comprenant une cellule d'extrémité élastique déplaçable consistant en un piston mobile divisant la colonne en un lit et en une chambre susceptible d'être mise sous pression et en des moyens de déplacement du piston pour comprimer le lit. Ladite cellule comprend un disque poreux susceptible d'être enlevé et un passage pour fluide relié de façon étanche à un tube rigide disposé parallèlement à l'axe du support de colonne.

La présente invention concerne un dispositif de remplisage de colonnes chromatographiques classiques, notamment par une méthode par voie humide qui dérive du procédé dit à compression axiale, qui utilise des colonnes sans usinage spécial et permet le réarrangement des particules pendant la compression.

La présente invention permet d'obtenir des colonnes dont les performances ne dépendent que de la qualité du garnissage et sont égales aux performances maximales que permet de prévoir la théorie et ce, quel que soit le diamètre de la colonne, de 1 à 100 centimètres. Ces performances exprimées en hauteur réduite d'un plateau théorique, sont de l'ordre de 3 diamètres de particules.

La colonne et la chambre de compression peuvent être excitées par des vibrations qui sont engendrées par une source mécanique ou à fluide sans pression ou par des moyens piézo-électriques et qui agissent dans le sens de leur longueur ou transversalement à leur axe ; on dispose ainsi de préférence au moins une source de vibration à la périphérie de la colonne et/ou de la chambre de compression et/ou de leur pièce de jonction à différents niveaux.

La colonne ainsi obtenue peut être utilisée indépendamment sur un ensemble chromatographique quelconque et ne plus comporter que les éléments nécessaires au maintien du garnissage et à l'écoulement hydrodynamique correct de l'éluant.

La présente invention concerne donc un dispositif de remplissage selon les lignes 3 à 7 de la p. 1 ci-dessus, caractérisé en ce que le piston comporte une gorge torique, usinée dans son corps, et reliée à sa face supérieure par une canalisation et à la face de poussée inférieure du piston par un(des) orifice(s) obturable(s) par un(des) clapet(s).

Selon un mode de réalisation de l'invention, le piston porte un collecteur séparé de l'intérieur de la chambre de compression par une plaque poreuse ou une grille et relié à une décharge extérieure par une canalisation susceptible d'être obturée par une vanne.

Selon un autre mode de réalisation de l'invention, la chambre de compression est séparée de la colonne par une pièce de jonction composite.

D'autres buts, avantages et caractéristiques de l'invention apparaîtront à la lecture de la description d'un mode de réalisation de l'invention, faite à titre non limitatif et en regard du dessin annexé où :

les figures 1 et 2 représentent schématiquement les résultats de compactage obtenus sur le garnissage des colonnes chromatographiques de type connu ;

la figure 3 représente en plan une vue extérieure d'une colonne de chromatographie, telle qu'elle se présente généralement ;

la figure 4 représente en coupe schématique le dispositif de remplissage d'une colonne chromatographique, selon l'invention ;

la figure 5 représente en vue extérieure en plan le même dispositif de remplissage pour une colonne de plus faible diamètre ;

la figure 6 est une vue en coupe avec arrachements et à plus grande échelle de la chambre de compression du dispositif de remplissage, au niveau du piston.

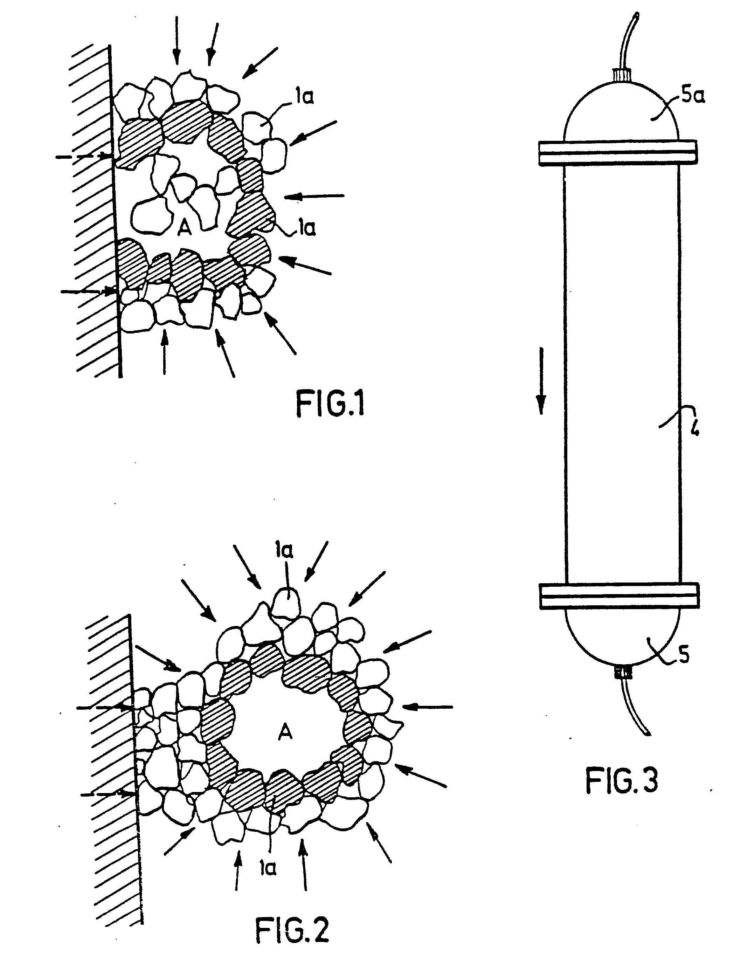

On voit sur les figures 1 et 2 que lorsqu'on applique une pression isotrope sur un garnissage, au cours du compactage dans les dispositifs connus certains grains (hachurés sur les figures) peuvent s'arranger de telle manière qu'ils forment des voûtes stables à l'intérieur desquelles peuvent subsister des espaces non compactés tels que A.

Si l'on se reporte à la figure 3, on voit qu'une colonne chromatographique se présente sous la forme d'un cylindre 4 aux extrémités duquel sont fixées deux pièces dites embouts de tête 5a et de fond 5 de la colonne 4.

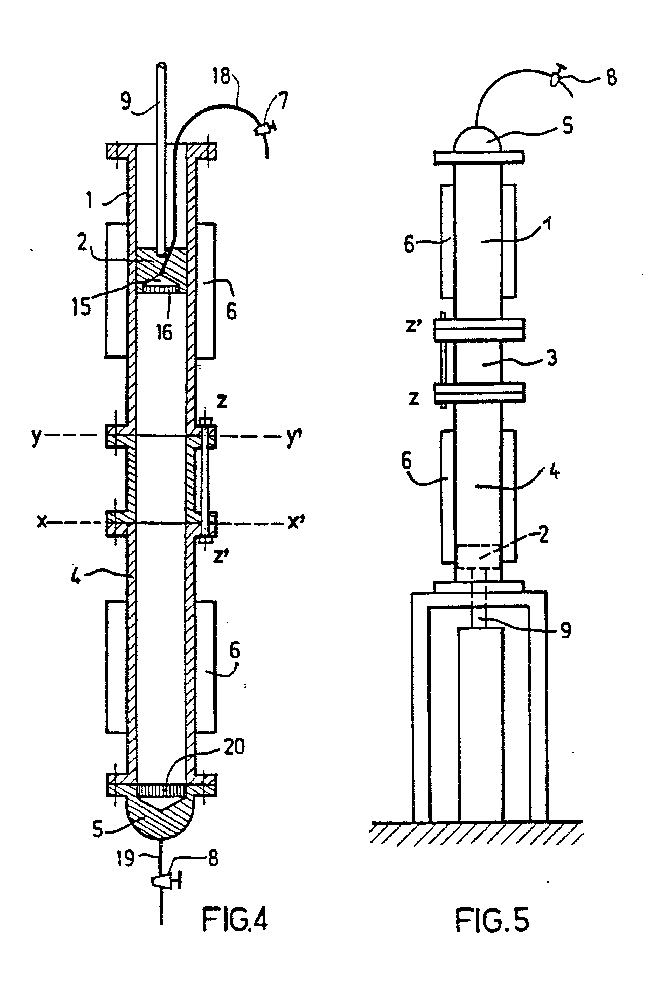

Ces embouts 5 et 5a comportent, notamment, une plaque poreuse 20 qui sert à retenir le garnissage et permet le passage du fluide vecteur (voir la figure 4).

Le dispositif de remplissage, objet de l'invention, est représenté sur la figure 4 et se compose de quatre pièces principales :

une chambre de compression cylindrique 1, de diamètre interne identique à celui des colonnes, et dotée d'un alésage cylindrique de bonnes qualités géométriques et frottantes ;

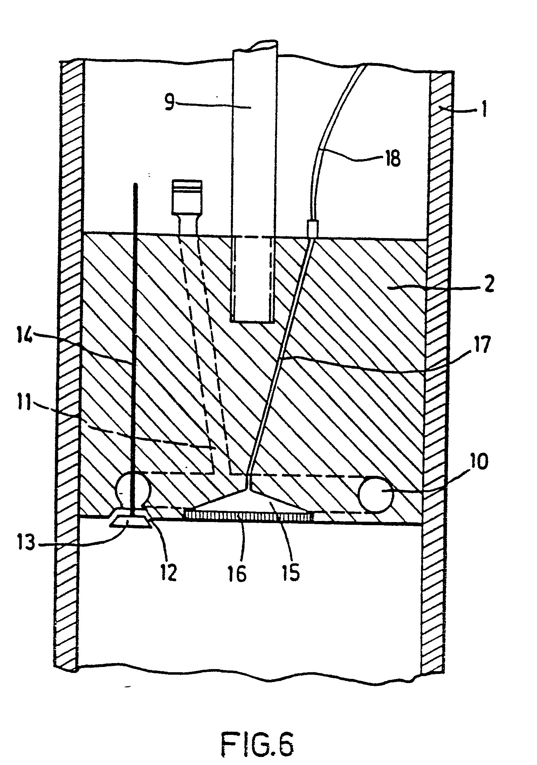

un piston 2 qui peut coulisser de façon étanche dans l'alésage de la chambre 1 et est soigneusement ajusté sur cet ajustage de manière à assurer une excellente étanchéité. Le piston 2 peut être actionné par un vérin ou tout autre dispositif mécanique. Sa face avant qui exerce la poussée dans la chambre 1 est creusée d'une cavité, formant collecteur 15, obturée par une plaque poreuse 16 et reliée à un récipient extérieur par l'intermédiaire d'une canalisation souple 18 qui peut être fermée par la vanne 7 (voir la figure 6) ;

une pièce de jonction 3 qui solidarise la chambre 1 et la colonne 4 au moyen de flasques boulonnés. Cette pièce peut pivoter autour d'un axe z z' après avoir été désolidarisée de la chambre de compression 1 et de la colonne 4 ;

des émetteurs de vibrations élastiques 6 qui sont fixés latéralement à la chambre 1 et à la colonne 4. La ou les sources de vibrations peuvent être actionnées mécaniquement par une pression de fluide ou des moyens piézo-électriques.

Pour procéder au remplissage de la colonne 4, celle-ci est fixée à la pièce de jonction 3 assemblée à la chambre de compression 1 et est équipée de son embout de fond 5 dont la canalisation de sortie 19 est susceptible d'être obturée par une vanne 8. Le piston 2 est dégagé de la partie supérieure de la chambre de compression 1. On introduit alors le garnissage 1a en suspension dans un liquide adéquat, dans la chambre commune formée à l'intérieur de la chambre 1, de la pièce de jonction 3 et de la colonne 4 après avoir fermé la vanne 8. Les sources de vibration 6 sont alors mises en service, ce qui contribue au maintien de l'homogénéité de la suspension. Le piston 2 est remis en place dans l'alésage de la chambre 1 et repoussé vers le bas par la tige de piston 9, la vanne 7 étant ouverte. Ceci permet à l'air emprisonné au-dessus de la suspension liquide de s'échapper vers l'extérieur.

Lorsque le liquide apparaît au-delà de la vanne 7, la vanne 8 est également ouverte tandis que le piston continue son déplacement vers l'embout 5. Le garnissage 19 se compacte pendant que le fluide de suspension s'écoule vers l'extérieur et les vibrations favorisent le réarrangement des particules. Le volume de suspension introduit a été calculé pour que, lorsque la compacité optimale est atteinte, le piston 2 se trouve encore dans la chambre de compression 1, sa face de poussée étant située légèrement au-dessus du plan y y'. L'écoulement vers l'extérieur cesse, alors que la pression dans le système augmente plus rapidement. On bloque la tige de vérin 9 et l'ensemble jonction 3 — colonne 4 — est désolidarisé de la chambre de compression 1. La tige de vérin 9 est repoussée à nouveau vers l'embout 5 avec précaution, ce qui a pour effet de dégager une « carotte » de garnissage compacté qui restait dans la chambre de compression 1. On désolidarise alors les flasques en regard de la jonction 3 et de la colonne 4 qui ne sont plus réunies que par l'axe z z' et l'on fait pivoter la jonction 3 autour de cet axe 3-3'. L'arête du flasque inférieur de la jonction 3 sectionne et arase le lit poreux à la partie supérieure de la colonne 4. Sur la surface nette obtenue, le filtre poreux de l'embout de tête 5a vient alors se plaquer parfaitement sans création de· volume mort. La colonne 4 est alors prête à l'emploi.

Le fonctionnement du dispositif selon l'invention consiste donc à appliquer simultanément sur le garnissage en suspension dans un fluide contenu dans une colonne chromatographique, un effort dirigé selon l'axe de cette colonne et qui impose le mouvement de tassement et des vibrations élastiques qui favorisent les réarrangements transversaux des particules. On obtient ainsi une colonne remplie de façon homogène d'un lit poreux de compacité optimale.

Selon l'invention, le piston 2 est muni d'un dispositif d'alimentation qui permet d'éviter également son extraction lors du remplissage de la chambre avec la suspension. Ce montage est représenté en coupe sur la figure 6, d'une façon schématique. Le piston 2 coulisse dans l'alésage de la chambre de compression 1. Il est actionné par la tige de poussée 9. Une gorge torique 10, usinée dans le corps du piston 2 est reliée à la face supérieure de celui-ci par une canalisation 11 et à la face de poussée inférieure par des orifices 12 obturables par des clapets 13. Ceux-ci sont commandés par une tige d'actionnement 14. Un collecteur central 15 obturé par une plaque poreuse 16 est relié à la face supérieure par une canalisation 17 sur laquelle est disposée la valve 7.

Le piston 2 étant en position haute dans la chambre, le remplissage du système avec la suspension s'effectue par la canalisation 11, la gorge 10 et les orifices 12. Ceux-ci sont ensuite obturés par les clapets 13 et l'on procède au compactage comme précédemment décrit.

Ainsi, les moyens de mise en vibration peuvent être disposés soit à la périphérie de la colonne 4 et de la chambre de compression 1 et en différentes positions selon l'axe de l'ensemble cylindrique qu'elles forment, soit sur un embout 5, 5a de colonne sur les flasques de raccordements des différents éléments et sur le flasque de fixation de l'ensemble à un bâti, soit en combinant ces deux types de disposition.

De même, les performances obtenues avec une colonne chromatographique selon l'invention sont exprimées par la hauteur réduite d'un plateau théorique, c'est-à-dire par le rapport numérique h/dp de la hauteur h d'un plateau théorique au diamètre moyen dp des particules du garnissage. Le dispositif objet de l'invention permet d'atteindre régulièrement la valeur 3 pour ce rapport.

## Revendications

1. Dispositif de remplissage d'une colonne chromatographique comportant une chambre de compression (1) mise sous pression au moyen d'un piston (2) coulissant de façon étanche dans l'alésage de la chambre de compression et actionné par un organe mécanique tel qu'une tige de vérin, caractérisé en ce que le piston (2) comporte une gorge torique (10), usinée dans son corps, et reliée à sa face supérieure par une canalisation (11) et à la face de poussée inférieure du piston par un(des) (12) orifice(s) obturable(s) par un(des) clapet(s) (13).

2. Dispositif selon la revendication 1, caractérisé en ce que le piston (2) porte un collecteur (15) séparé de l'intérieur de la chambre de compression (1) par une plaque poreuse (16) ou une grille et relié à une décharge extérieure par une canalisation (17) susceptible d'être obturée par une vanne (7).

3. Dispositif selon la revendication 1 ou 2, caractérisé en ce que la chambre de compression (1) est séparée de la colonne (4) par une pièce de jonction composite (3).

## Claims

1. Device for packing a chromatography column comprising a compression chamber (1) which is pressurized by a piston (2) tightly slideable within the bore of said compression chamber and actuated by a mechanical member, such as a jack piston rod, characterized in that the piston (2) comprises a toric groove (10) provided in its body and connected to its upper surface by a conduit (11) and to the lower thrust surface of said piston by one or more orifices adapted to be sealed by a valve (or valves) (13).

2. Device according to claim 1, characterized in that the piston (2) comprises a collector (15) separated from the inner space of the compression chamber (1) by a porous plate (16) or a grid and connected to an outer relief location by a conduit (17) adapted to be sealed by a valve (7).

3. Device according to claim 1 or 2, characterized in that the compression chamber (1) is separated from the column (4) by a composite connection piece (3).

## Patentansprüche

1. Vorrichtung zum Bepacken einer Chromatographiesäule mit einer Druckkammer (1), die durch einen in der Bohrung der Kammer dicht geführten Kolben (2) unter Druck gesetzt wird, wobei der Kolben durch ein mechanisches Organ, wie Drucktopfkolbenstange, betätigt wird, dadurch gekennzeichnet, dass der Kolben eine ringförmige Ausnehmung (10) aufweist, die in den Kolbenkörper eingearbeitet ist und durch einen Kanal (11) mit seiner Oberseite, sowie durch eine oder mehrere, durch je ein Ventil (13) verschliessbare Offnungen (12) mit der druckbeaufschlagten Kolbenunterseite verbunden ist.

2. Vorrichtung nach Anspruch 1, dadurch gekennzeichnet, dass der Kolben (2) einen durch eine poröse Platte (16) oder ein Gitter vom Innenraum der Druckkammer (1) getrennten Kollektor (15) aufweist, der durch einen vermittels eines Ventils (7) verschliessbaren Kanal (17) mit einer äusseren Entlastungsstelle verbunden ist.

3. Vorrichtung nach Anspruch 1 oder 2, dadurch gekennzeichnet, dass die Druckkammer (1) von der Säule (4) durch einen zusammengesetzten Verbindungsteil (3) getrennt ist.

FIG.1

FIG.2

FIG.3

FIG.4

FIG.5

FIG.6